# EUROPEAN PATENT SPECIFICATION

(11) **EP 0 594 239 B1**
(45) Date of publication and mention of the grant of the patent: **07.08.1996**
(21) Application number: 93202858.2
(22) Date of filing: 08.10.1993
(51) Int. Cl.: B41M 5/38, C09B 23/14, C07C 255/42

(54) **Dye-donor element comprising magenta tricyanovinylaniline dyes**
Farbstoffgebendes Element, das Magenta-Tricyanovinylfarbstoffe enthält
Elément donneur de colorant comprenant des colorants magenta de type tricyanovinylaniline

(30) Priority: 20.10.1992 EP 92203208
(43) Date of publication of application: 27.04.1994
(73) Proprietor: AGFA-GEVAERT naamloze vennootschap, B-2640 Mortsel (BE)
(72) Inventor: Janssens, Wilhelmus, c/o Agfa-Gevaert N.V., B-2640 Mortsel (BE); Vanmaele, Luc, B-2640 Mortsel (BE)

(56) References cited:
- EP-A- 0 258 856
- EP-A- 0 279 467
- EP-A- 0 441 396
- DATABASE WPI Section Ch, Week 9045, Derwent Publications Ltd., London, GB; Class E24, AN 90-337851 & JP-A-2 241 786 (MITSUBISHI KASEI CORPORATION) 26 September 1990
- CHEMICAL ABSTRACTS, vol. 103, no. 8, 26 August 1985, Columbus, Ohio, US; abstract no. 55435w, '(tricyanovinyl)aniline dyes for thermal transfer recording' page 74-75 & JP-A-60 031 563 (MITSUBISHI CHEM. IND. COL., LTD)
- JOURNAL OF ORGANIC CHEMISTRY vol. 23 , 1958 , EASTON US pages 420 - 427 D.H.MCDANIEL ET AL. 'an extended table of hammett substituent constants based on the ionization of substituted benzoic acids'

## Description

### 1. Field of the invention

The present invention relates to dye donor elements comprising magenta N-aryl-N-alkyl-substituted tricyanovinylaniline dyes for use according to thermal dye transfer methods.

### 2. Background of the invention.

Thermal dye transfer methods include thermal dye sublimation transfer also called thermal dye diffusion transfer. This is a recording method in which a dye-donor element provided with a dye layer containing sublimating dyes having heat transferability is brought into contact with a receiver sheet and selectively, in accordance with a pattern information signal, heated with a thermal printing head provided with a plurality of juxtaposed heat-generating resistors, whereby dye is transferred from the selectively heated regions of the dye-donor element to the receiver sheet and forms a pattern thereon, the shape and density of which are in accordance with the pattern and intensity of heat applied to the dye-donor element.

A dye-donor element for use according to thermal dye sublimation transfer usually comprises a very thin support e.g. a polyester support, one side of which is covered with a dye layer comprising the printing dyes. Usually, an adhesive or subbing layer is provided between the support and the dye layer. Normally, the opposite side of the support is covered with a slipping layer that provides a lubricated surface against which the thermal printing head can pass without suffering abrasion. An adhesive layer may be provided between the support and the slipping layer.

The dye layer can be a monochromic dye layer or it may comprise sequential repeating areas of differently coloured dyes e.g. dyes having a cyan, magenta, yellow, and optionally black hue. When a dye-donor element containing three or more primary colour dyes is used, a multicolour image can be obtained by sequentially performing the dye transfer process steps for each colour.

Many of the dyes proposed for use in thermal dye sublimation transfer are not sufficient in performance since they yield inadequate transfer densities at reasonable coating coverages, or because they have inadequate spectral characteristics for substractive colour systems, or because they have a poor light-fastness.

It has been established that for producing multicolour reproductions by the so-called subtractive colours viz. yellow, magenta, and cyan, especially the spectral absorption charcteristics of the magenta dye employed are of great importance. It is indeed the absorption in the blue and in the red range of the spectrum that determines whether vivid blue and vivid red and orange can be obtained.

Magenta dyes that satisfy these absorption requirements can be found in the class of the so-called tricyanovinylaniline dyes. Such magenta dyes have been described for use in transfer printing on fabrics in US 4,159,192 and for use in thermal transfer recording in JP 60/031,563, JP 02/241 786, EP 441,396, and EP 279,467.

Although many magenta dyes of this class have indeed excellent spectral absorption characteristics, they lack sufficient light-fastness.

The poor light-fastness of tricyanovinylaniline dyes used for thermal printing has been emphasized in Chemistry and Industry, 16 October 1989 page 681. Fig. 7.

### 3. Summary of the invention.

It is therefore an object of the present invention to improve the light-fastness of magenta tricyanovinylaniline dye images.

Further objects will become apparent from the description hereinafter.

According to the present invention the light-fastness of magenta tricyanovinylaniline dye images can be improved by using an assemblage comprising a receiving element also called receiver sheet having a receiver layer containing a polyvinylchloride and a dye-donor element comprising a support having thereon a dye layer containing a binder and a magenta N-aryl-N-alkyl-substituted tricyanovinylaniline dye, wherein the N-aryl group either carries an electron-donative group having a negative Hammett sigma para value, or carries 2 to 5 substituents, which may be same or different and have Hammett sigma para values, the sum of which is negative.

Preferred magenta N-aryl-N-alkyl-substituted tricyanovinylaniline dyes according to the present invention correspond to the following general formula (I) : 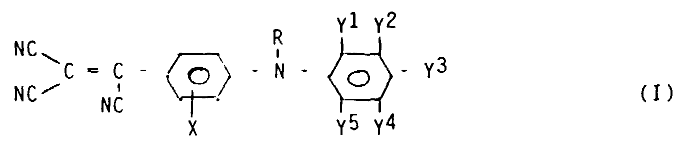 wherein :
X represents hydrogen or a substituent,
R represents a branched or unbranched alkyl group, a substituted branched or unbranched alkyl group, a cycloalkyl group, or a substituted cycloalkyl group, and
each of Y¹, Y², Y³_{,} Y⁴, and Y⁵ represents hydrogen or a substituent, with the proviso that at least one of Y¹ to Y⁵ is not hydrogen and that - when only 1 of Y¹ to Y⁵ represents a substituent - this substituent is an electron-donative group having a negative Hammett sigma para value, or - when 2 or more of Y¹ to Y⁵ represent a substituent, these substituents may be same or different and have Hammett sigma para values, the sum of which is negative.

The present invention also provides a method of forming an image by image-wise heating a dye-donor element comprising a support having thereon a dye layer comprising a binder and at least one magenta N-aryl-N-alkyl-substituted tricyanovinylaniline dye, the N-aryl group of which either carries an electron-donative group having a negative Hammett sigma para value, or carries 2 to 5 substituents, which may be same or different and have Hammett sigma para values, the sum of which is negative, and causing transfer of the image-wise heated dye to a receiver sheet having a dye-image-receiving layer comprising at least one homo- or copolymer of polyvinyl chloride.

### 4. Detailed description of the invention.

The signification of the Hammett sigma values and tables of sigma constants have been described in "Physical Organic Chemistry" by L.P. Hammett - Mc Graw-Hill Book Company : Chapter VII pages 184-228 and in the paper "A general analysis of mesomeric electronic effects of substituents in aromatic systems" published by R. Pollet and R. Van Poucke in Tetrahedron Letters N° 52, pages 4741-4751, 1965, Pergamon Press Ltd., Great Britain. Tables of sigma constants have also been described in Journal of Organic Chemistry, 23, 420 (1958) by D.M. McDaniel and H.C. Brown and in Quarterly Reviews, 18, 295 (1964) by J. Clark and D.D. Perrin.

The dyes according to the invention corresponding to the general formula (I) can be prepared according to established synthetic procedures known e.g. from US 2,762,810 and JACS, 80 (1958) pages 2806-15 and from JP 60 /31,563. A known method is the condensation of appropriately substituted aniline with tetracyanoethylene.

Compounds within the scope of the present invention include the following listed in Table 1.

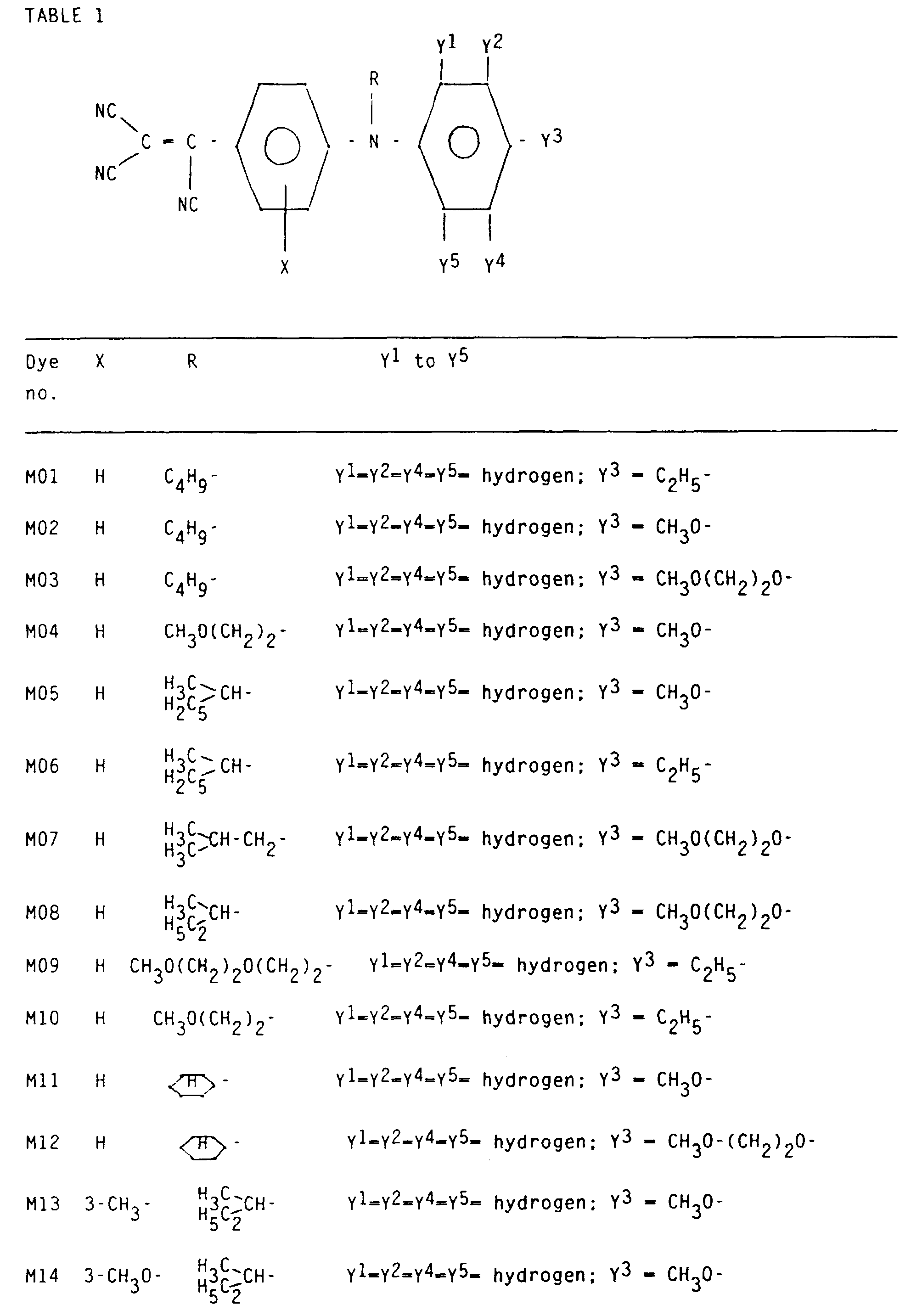

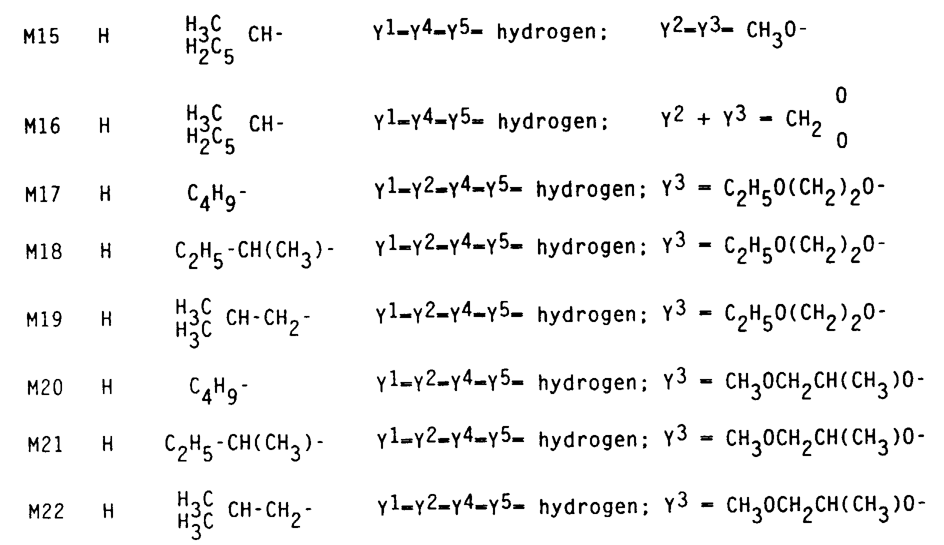

It has been established that the tricyanovinylaniline dyes of the present invention have a very good light-fastness, which is apparently due to the presence on the N-aryl group of an electron-donative group having a negative Hammett sigma para value or of 2 to 5 substituents, which may be same or different and have Hammett sigma para values, the sum of which is negative. The light-fastness of the dyes according to the present invention is particularly striking when the dyes have been transferred onto a receiver sheet having a dye-image-receiving layer comprising a polyvinyl chloride, preferably a copolymer, whereas other known tricyanovinylaniline dyes do not exhibit such large improvement when transferred to a polyvinylchloride receiving layer.

The dye layer of the dye-donor element is formed preferably by adding the dyes, a polymeric binder medium, and other optional components to a suitable solvent or solvent mixture, dissolving or dispersing these ingredients to form a coating composition that is applied to a support, which may have been provided first with an adhesive or subbing layer, and dried.

The dye layer thus formed generally has a thickness of about 0.2 to 5.0 µm, preferably 0.4 to 2.0 µm, and the amount ratio of dye to binder generally ranges from 9:1 to 1:3 weight, preferably from 3:1 to 1:2 by weight.

The following polymers can be used as polymeric binder : cellulose derivatives, such as ethyl cellulose, hydroxyethyl cellulose, ethylhydroxy cellulose, ethylhydroxyethyl cellulose, hydroxypropyl cellulose, methyl cellulose, cellulose nitrate, cellulose acetate formate, cellulose acetate hydrogen phthalate, cellulose acetate, cellulose acetate propionate, cellulose acetate butyrate, cellulose acetate pentanoate, cellulose acetate benzoate, cellulose triacetate; vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacrylic acid, polymethyl methacrylate and styrene-acrylate copolymers; polyester resins; polycarbonates; copolystyrene-acrylonitrile; polysulfones; polyphenylene oxide; organosilicones, such as polysiloxanes; epoxy resins and natural resins, such as gum arabic. Preferably, the binder for the dye layer of the present invention comprises cellulose acetate butyrate or copolystyrene-acrylonitrile.

The dye-donor element of the present invention can be used for the recording of a coloured image together with primary colour dye-donor elements comprising respectively a magenta dye or a mixture of magenta dyes, a cyan dye or a mixture of cyan dyes and a yellow dye or a mixture of yellow dyes.

Any dye can be used in such a primary colour dye layer provided it is easily transferable to the dye-image-receivng layer of the receiver sheet by the action of heat.

The dyes of the present invention can be used alone or mixed with one another, or even mixed with other primary colour dyes.

Typical and specific examples of other primary colour dyes for use in thermal dye sublimation transfer have been described in e.g. EP 400,706, EP 209,990, EP 216,483, EP 218,397, EP 227,095, EP 227,096, EP 229,374, EP 235,939, EP 247,737, EP 257,577, EP 257,580, EP 258,856, EP 279,330, EP 279,467, EP 285,665, US 4,743,582, US 4,753,922, US 4,753,923, US 4,757,046, US 4,769,360, US 4,771,035, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/268,493, JP 86/268,494, JP 85/268,495, and JP 86/284,489.

The coating layer may also contain other additives, such as curing agents, preservatives, organic or inorganic fine particles, dispersing agents, antistatic agents, defoaming agents, viscosity-controlling agents, these and other ingredients having been described more fully in EP 133,011, EP 133,012, EP 111,004, and EP 279,467.

Any material can be used as the support for the dye-donor element provided it is dimensionally stable and capable of withstanding the temperatures involved, up to 400°C over a period of up to 20 msec, and is yet thin enough to transmit heat applied on one side through to the dye on the other side to effect transfer to the receiver sheet within such short periods, typically from 1 to 10 msec. Such materials include polyesters such as polyethylene terephthalate, polyamides, polyacrylates, polycarbonates, cellulose esters, fluorinated polymers, polyethers, polyacetals, polyolefins, polyimides, glassine paper and condenser paper. Preference is given to a support comprising polyethylene terephthalate. In general, the support has a thickness of 2 to 30 µm. The support may also be coated with an adhesive of subbing layer, if desired.

The dye layer of the dye-donor element can be coated on the support or printed thereon by a printing technique such as a gravure process.

A dye-barrier layer comprising a hydrophilic polymer may also be employed between the support and the dye layer of the dye-donor element to enhance the dye transfer densities by preventing wrong-way transfer of dye backwards to the support. The dye barrier layer may contain any hydrophilic material that is useful for the intended purpose. In general, good results have been obtained with gelatin, polyacrylamide, polyisopropyl acrylamide, butyl methacrylate-grafted gelatin, ethyl methacrylate-grafted gelatin, ethyl acrylate-grafted gelatin, cellulose monoacetate, methylcellulose, polyvinyl alcohol, polyethyleneimine, polyacrylic acid, a mixture of polyvinyl alcohol and polyvinyl acetate, a mixture of polyvinyl alcohol and polyacrylic acid, or a mixture of cellulose monoacetate and polyacrylic acid. Suitable dye barrier layers have been described in e.g. EP 227,091 and EP 228,065. Certain hydrophilic polymers e.g. those described in EP 227,091 also have an adequate adhesion to the support and the dye layer, so that the need for a separate adhesive or subbing layer is avoided. These particular hydrophilic polymers used in a single layer in the dye-donor element thus perform a dual function, hence are referred to as dye-barrier/subbing layers.

Preferably the reverse side of the dye-donor element has been coated with a slipping layer to prevent the printing head from sticking to the dye-donor element. Such a slipping layer would comprise a lubricating material such as a surface-active agent, a liquid lubricant, a solid lubricant or mixtures thereof, with or without a polymeric binder. The surface-active agents may be any agents known in the art such as carboxylates, sulfonates, phosphates, aliphatic amine salts, aliphatic quaternary ammonium salts, polyoxyethylene alkyl ethers, polyethylene glycol fatty acid esters, fluoroalkyl C₂-C₂₀ aliphatic acids. Examples of liquid lubricants include silicone oils, synthetic oils, saturated hydrocarbons, and glycols. Examples of solid lubricants include various higher alcohols such as stearyl alcohol, fatty acids and fatty acid exters. Suitable slipping layers have been described in e.g. EP 138,483, EP 227,090, US 4,567,113, US 4,572,860, US 4.717,711. Preferably the slipping layer comprises a styreneacrylonitrile copolymer or a styrene-acrylonitrile-butadiene copolymer or a mixture thereof or a polycarbonate as described in European patent application 0 527 520, as binder and a polysiloxane-polyether copolymer or polytetrafluoroethylene or a mixture thereof as lubicrant in an amount of 0.1 to 10% by weight of the binder or binder mixture. (EP-A-0 527 520 constitutes prior art according to Article 54 (3)(4) EPC for all designated contracting states.

The support for the receiver sheet that is used with the dye-donor element may be a transparent film of e.g. polyethylene terephthalate, a polyether sulfone, a polyimide, a cellulose ester or a polyvinyl alcohol-co-acetal. The support may also be a reflective one such as a baryta-coated paper, polyethylene-coated paper or white polyester i.e. white-pigmented polyester. Blue-coloured polyethylene terephthalate film can also be used as support.

To avoid poor adsorption of the transferred dye to the support of the receiver sheet this support must be coated with a special layer called dye-image-receiving layer, into which the dye can diffuse more readily. The dye-image-receiving layer according to the invention comprises a polyvinyl chloride. Preferably the dye-image receiving layer comprises a heat-cured product of poly(vinyl chloride/co-vinyl acetate/co-vinyl alcohol) and polyisocyanate.

In order to improve the light-fastness and other stabilities of recorded images UV-absorbers, singlet oxygen quenchers such as HALS-compounds (Hindered Amine Light Stabilizers) and/or antioxidants can be incorporated into the dye-image-receiving layer.

The dye layer of the dye-donor element or the dye-image-receiving layer of the receiver sheet may also contain a releasing agent that aids in separating the dye-donor element from the receiver sheet after transfer. The releasing agents can also be incorporated in a separate layer on at least part of the dye layer and/or of the dye-image-receiving layer. Suitable releasing agents are solid waxes, fluorine- or phosphate-containing surface-active agents and silicone oils. Suitable releasing agents have been described in e.g. EP 133,012, JP 85/19,138, and EP 227,092.

The dye-donor elements according to the invention are used to form a dye transfer image, which process comprises placing the dye layer of the dye-donor element in face-to-face relation with the dye-image-receiving layer of the receiver sheet and image-wise heating from the back of the dye-donor element. The transfer of the dye is accomplished by heating for about several milliseconds at a temperature of 400°C.

When the process is performed for but one single colour, a monochromic dye transfer image is obtained. A multicolour image can be obtained by using a dye-donor element containing three or more primary colour dyes and sequentially performing the process steps described above for each colour. The above sandwich of dye-donor element and receiver sheet is formed on three occasions during the time when heat is applied by the thermal printing head. After the first dye has been transferred, the elements are peeled apart. A second dye-donor element (or another area of the dye-donor element with a different dye area) is then brought in register with the dye-receiving element and the process is repeated. The third colour and optionally further colours are obtained in the same manner.

In addition to thermal heads, laser light, infrared flash, or heated pens can be used as the heat source for supplying heat energy. Thermal printing heads that can be used to transfer dye from the dye-donor elements of the present invention to a receiver sheet are commercially available. In case laser light is used, the dye layer or another layer of the dye element has to contain a compound that absorbs the light emitted by the laser and converts it into heat e.g. carbon black.

Alternatively, the support of the dye-donor element may be an electrically resistive ribbon consisting of e.g. a multilayer structure of a carbon-loaded polycarbonate coated with a thin aluminium film. Current is injected into the resistive ribbon by electrically addressing a printing head electrode resulting in highly localized heating of the ribbon beneath the relevant electrode. The fact that in this case the heat is generated directly in the resistive ribbon and that it is thus the ribbon that gets hot leads to an inherent advantage in printing speed using the resistive ribbon/electrode head technology as compared to the thermal head technology, according to which the various elements of the thermal head get hot and must cool down before the head can move to the next printing position.

The following example illustrates the invention in more detail without, however, limiting the scope thereof.

### EXAMPLE

Receiver sheets were prepared by coating a polyethylene-coated paper support weighing 180 g with a dye-image-receiving layer from a solution in ethyl methyl ketone of 3,6 g/m² of poly(vinyl chloride/co-vinyl acetate/co-vinyl alcohol) (Vinylite VAGD supplied by Union Carbide), 0,336 g/m² of diisocyanate (Desmodur N3300 supplied by Bayer AG), and 0,2 g/m² of hydroxy-modified polydimethylsiloxane (Tegomer H SI 2111 supplied by Goldschmidt).

Dye-donor elements for use according to thermal dye sublimation transfer were prepared as follows.

A solution comprising 0,2 % by weight of dye and 0,5 % by weight of poly(styrene-co-acrylonitrile) (Luran 388S, supplied by BASF Germany) as binder in methyl ethyl ketone was prepared.

From this solution a dye layer having a wet thickness of 100 µm was coated on a polyethylene terephthalate film support having a thickness of 6 µm and carrying a conventional subbing layer. The resulting dye layer was dried by evaporation of the solvent.

The opposite side of the film support was coated with a subbing layer of a copolyester comprising ethylene glycol, adipic acid, neopentyl glycol, terephthalic acid, isophthalic acid, and glycerol.

The resulting subbing layer was covered with a solution in methyl ethyl ketone of 0.5 g/m² of a polycarbonate having the following structural formula to form a heat-resistant layer : 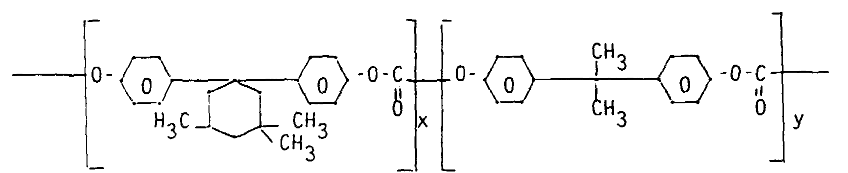 wherein x = 55 mol% and y = 45 mol%.

Finally, a top layer of polyether-modified polydimethylsiloxane (Tegoglide 410, Goldschmidt) was coated from a solution in isopropanol on the resulting heat-resistant polycarbonate layer.

The dye-donor element was printed in combination with a receiver sheet in a Mitsubishi colour video printer CP100E.

The receiver sheet was separated from the dye-donor element and the colour density value of the recorded image was measured in transmission by means of a Macbeth TR 924 densitometer in the green region in Status A mode.

The above described experiment was repeated for each of the dyes identified in the Tables hereinafter.

Finally, each receiver sheet was subjected to irradiation by means of a xenon lamp of 150 klux for a time indicated in hours in Table 3. The colour density values were measured again and the density loss (in %) was calculated and listed in Table 3.

In Table 2 the structure of known colour tricyanovinylaniline dyes used as comparison examples C01 to C10 is given. These comparison dyes correspond to the following formula (II) :

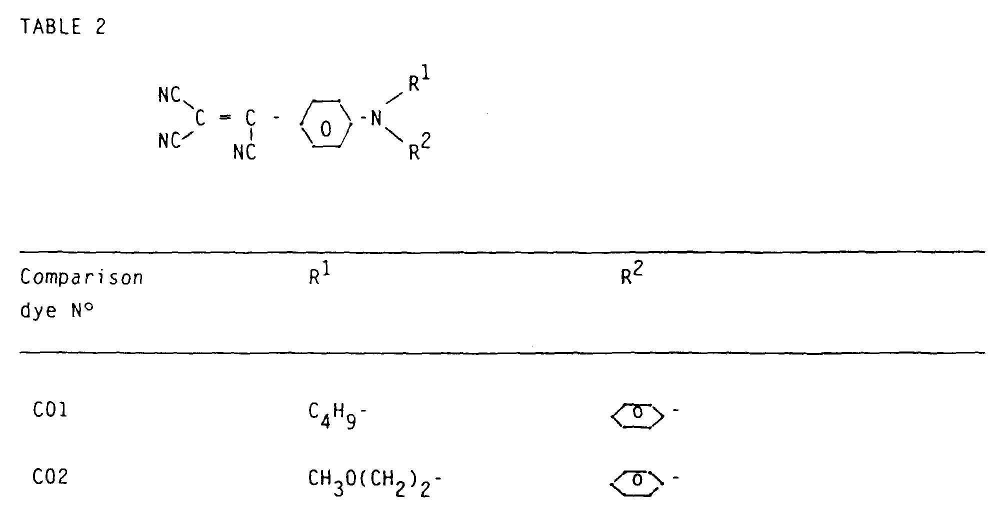

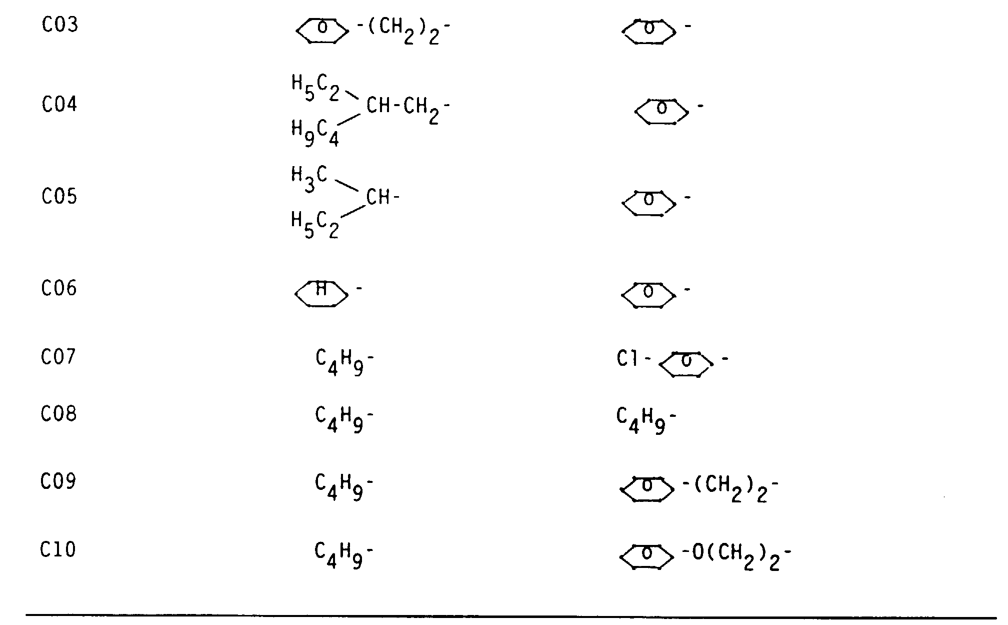

The light-fastness of the comparison dyes C01 to C06 and of the dyes M01 to M12 according to the invention can be derived from Table 3.

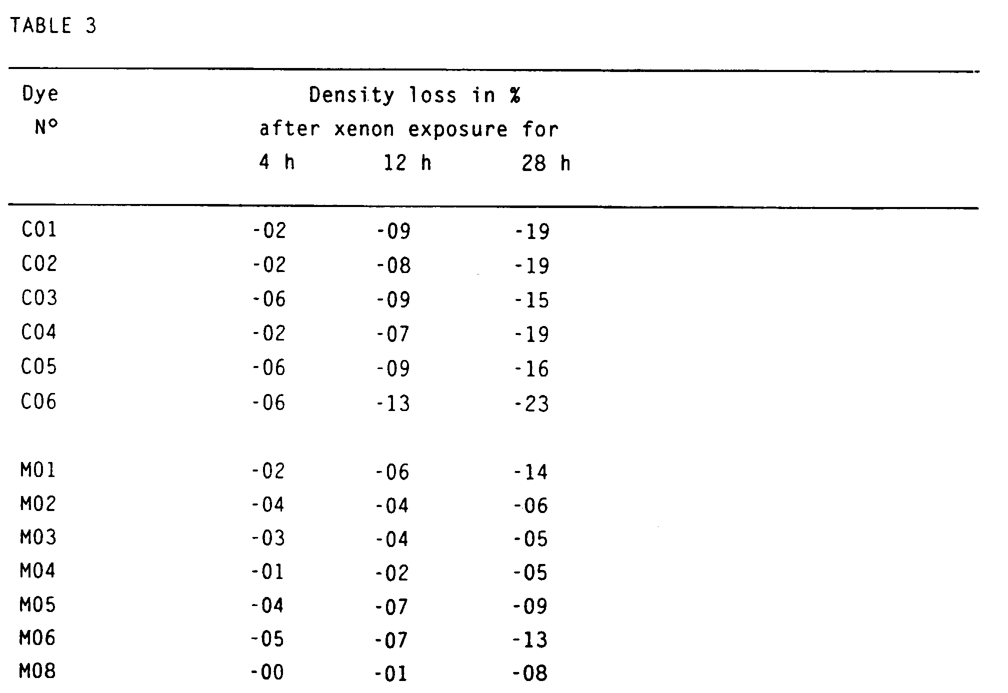

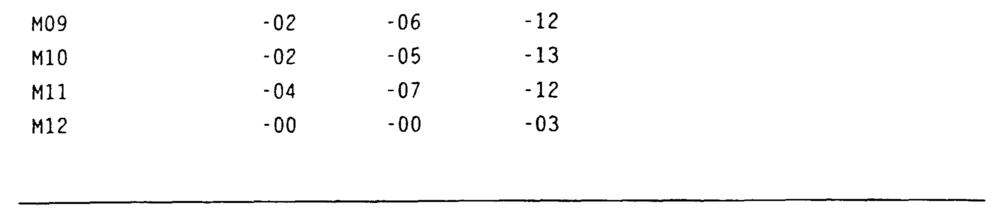

It can be concluded that thanks to the presence of substituents with negative Hammett sigma para values on the N-aryl group of the tricyanovinylaniline dyes of the present invention said dyes have a substantially improved light-fastness as compared with the comparison dyes C01 to C06.

In Table 4 the light-fastness of tricyanovinylaniline dyes transferred onto a receiver sheet having a dye-image-receiving layer comprising polyvinyl chloride (PVC) according to the present invention is compared to the light-fastness of the same dyes but transferred onto a commercially available receiver sheet (Mitsubishi CK 100S) having a polyester (PET) dye-image-receiving layer or a commercially available receiver sheet (Kodak Ektatherm XL-100-8P) having a polycarbonate (PCAR) dye-image-receiving layer. In Table 4 light-fastness results of dyes according to the present invention are compared also with the results obtained with known tricyanovinylaniline dyes.

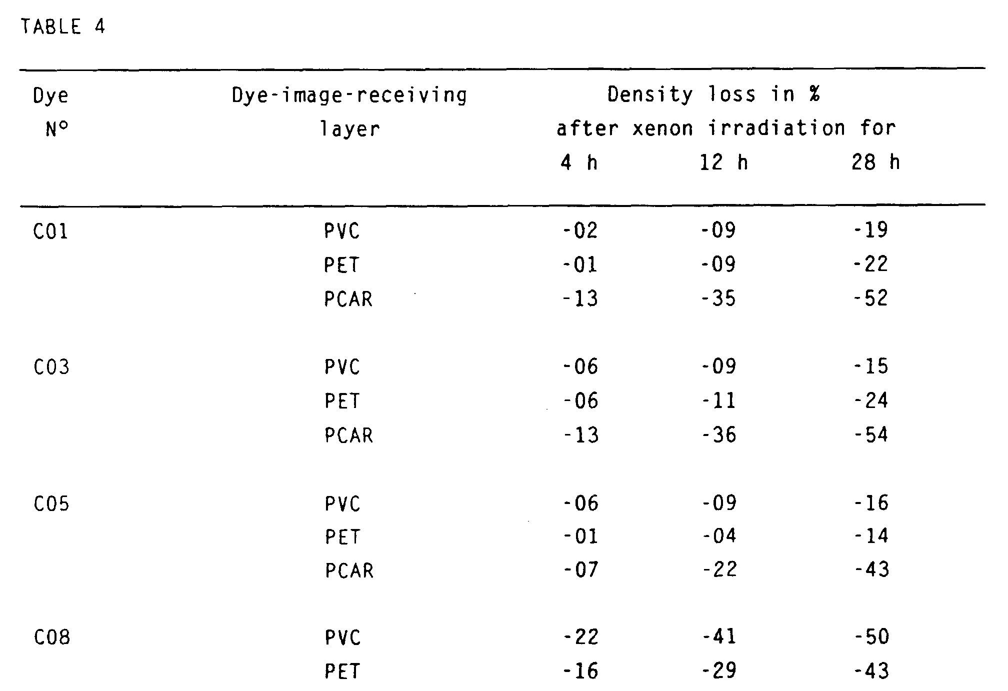

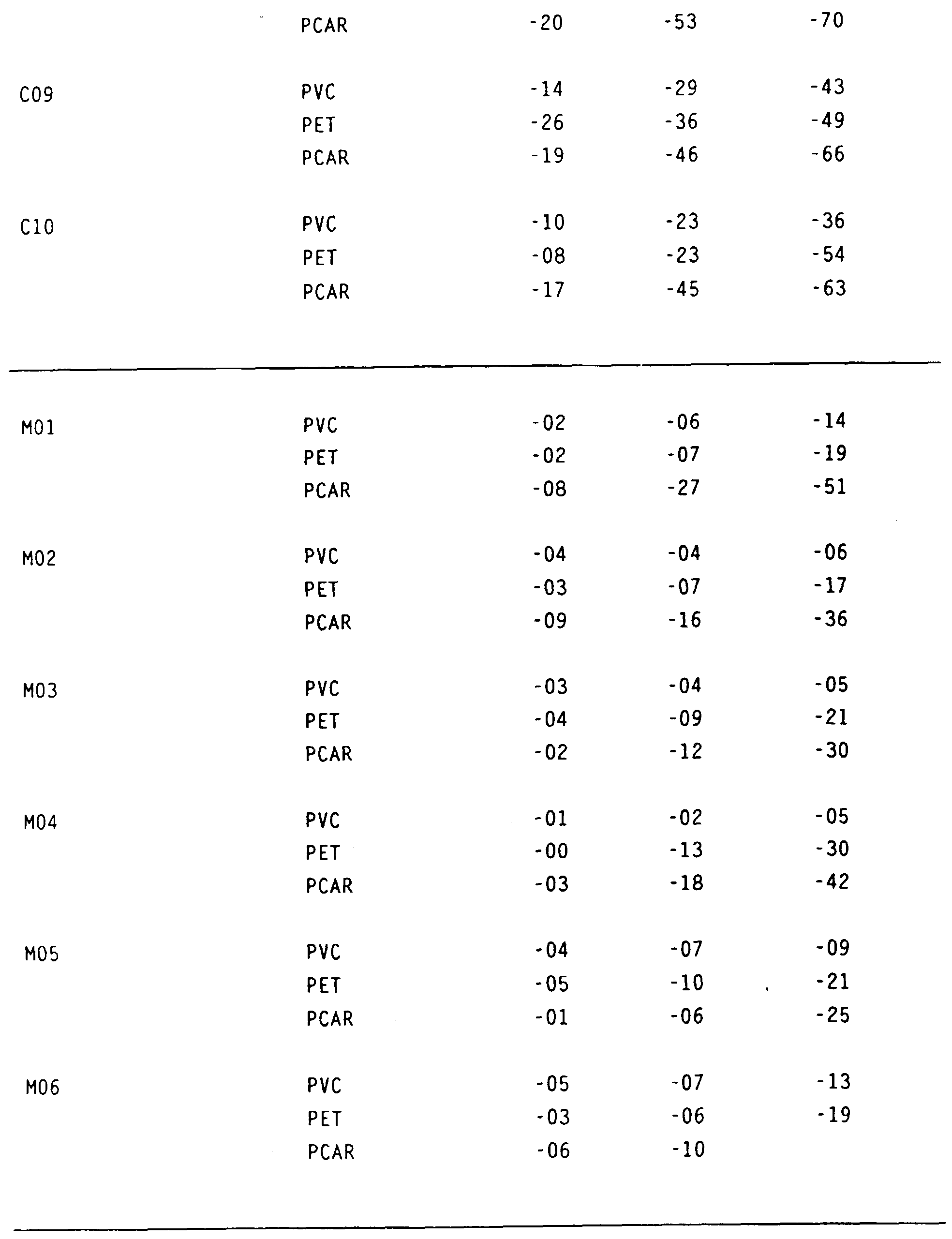

The results listed in Table 4 clearly show that the light-fastness of the dyes according to the present invention - when transferred on a receiver sheet having a dye-image-receiving layer comprising polyvinyl chloride (PVC) - is considerably better than that obtained on conventional dye-image-receiving layers comprising polyester or polycarbonate.

## Claims

1. An assemblage for use in thermal dye transfer printing comprising a dye donor element and a receiving element containing a dye receiving layer comprising a polyvinylchloride, said dye donor element comprising a support having thereon a dye layer comprising a binder and a magenta N-aryl-N-alkyl-substituted tricyanovinylaniline dye, wherein the N-aryl group either carries an electron-donative group having a negative Hammett sigma para value, or carries 2 to 5 substituents, which may be same or different and have Hammett sigma para values, the sum of which is negative.

2. An assemblage according to claim 1, wherein said magenta N-aryl-N-alkyl-substituted tricyanovinylaniline dye corresponds to the general formula (I) : 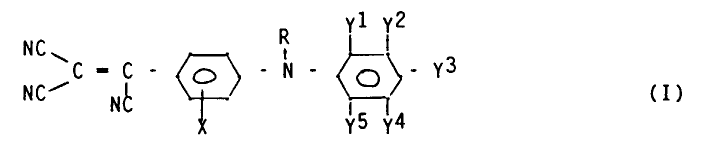 wherein :
X represents hydrogen or a substituent,
R represents a branched or unbranched alkyl group, a substituted branched or unbranched alkyl group, a cycloalkyl group, or a substituted cycloalkyl group, and
each of Y¹, Y², Y³, Y⁴, and Y⁵ represents hydrogen or a substituent, with the proviso that at least one of Y¹ to Y⁵ is not hydrogen and that - when only 1 of Y¹ to Y⁵ represents a substituent - this substituent is an electron-donative group having a negative Hammett sigma para value, or - when 2 or more of Y¹ to Y⁵ represent a substituent, these substituents may be same or different and have Hammett sigma para values, the sum of which is negative.

3. An assemblage according to claim 1 or 2, wherein said dye receiving layer comprises a heat-cured product of copoly(vinylchloride/vinylacetate/vinylalcohol) and poly-isocyanate.

4. Method of forming an image by image-wise heating a dye-donor element comprising a support having thereon a dye layer comprising a binder and at least one magenta N-aryl-N-alkyl-substituted tricyanovinylaniline dye, the N-aryl group of which either carries an electron-donative group having a negative Hammett sigma para value, or carries 2 to 5 substituents, which may be same or different and have Hammett sigma para values, the sum of which is negative, and causing transfer of the image-wise heated dye to a receiving element having a dye-image-receiving layer comprising at least one copolymer of polyvinyl chloride.

5. A method according to claim 4, wherein said magenta N-aryl-N-alkyl-substituted tricyanovinylaniline dye corresponds to the general formula (I) : 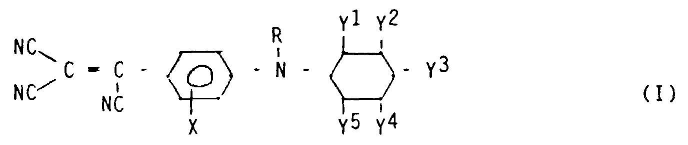 wherein :
X represents hydrogen or a substituent,
R represents a branched or unbranched alkyl group, a substituted branched or unbranched alkyl group, a cycloalkyl group, or a substituted cycloalkyl group, and
each of Y¹, Y², Y³, Y⁴, and Y⁵ represents hydrogen or a substituent, with the proviso that at least one of Y¹ to Y⁵ is not hydrogen and that - when only 1 of Y¹ to Y⁵ represents a substituent - this substituent is an electron-donative group having a negative Hammett sigma para value, or - when 2 or more of Y¹ to Y⁵ represent a substituent, these substituents may be same or different and have Hammett sigma para values, the sum of which is negative.

6. A method according to claim 4, wherein said dye receiving layer comprises a heat-cured product of copoly(vinylchloride/vinylacetate/vinylalcohol) and poly-isocyanate.

## Patentansprüche

1. Eine Anordnung für den Gebrauch beim thermischen Farbstoffübertragungsdruck, bestehend aus einem farbstoffgebendes Element und einem Empfangselement mit einer Polyvinylchlorid enthaltenden Farbstoffempfangsschicht, wobei das farbstoffgebende Element einen Träger und darauf eine Farbstoffschicht mit einem Bindemittel und einem N-Aryl-N-alkyl-substituierten Magenta-Tricyanovinylanilinfarbstoff enthält, dadurch gekennzeichnet, daß die N-Arylgruppe entweder eine elektronenliefernde Gruppe mit einem negativen Hammett-Sigma-Para-Wert oder 2 bis 5 identische oder verschiedene Substituenten, deren Hammett-Sigma-Para-Werte eine negative Summe ergeben, trägt.

2. Anordnung nach Anspruch 1, dadurch gekennzeichnet, daß der N-Aryl-N-alkyl-substituierte Magenta-Tricyanovinylanilinfarbstoff der allgemeinen Formel (I) entspricht : 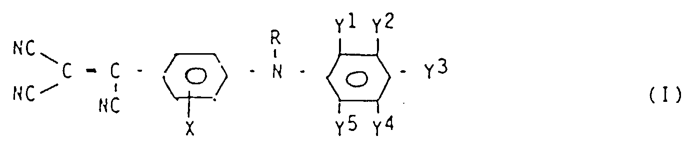 in der bedeuten :
X Wasserstoff oder einen Substituenten,
R eine verzweigte oder unverzweigte Alkylgruppe, eine substituierte verzweigte oder unverzweigte Alkylgruppe, eine Cycloalkylgruppe oder eine substituierte Cycloalkylgruppe, und
Y¹, Y², Y³, Y⁴ und Y⁵ je Wasserstoff oder einen Substituenten, vorausgesetzt, daß wenigstens ein Element von Y¹ bis Y⁵ nicht Wasserstoff ist und - falls nur 1 Element von Y¹ bis Y⁵ einen Substituenten darstellt - dieser Substituent eine elektronenliefernde Gruppe mit einem negativen Hammett-Sigma-Para-Wert darstellt, oder - falls 2 oder mehr Elemente von Y¹ bis Y⁵ einen Substituenten darstellen, diese Substituenten gleich oder verschieden sein können und Hammett-Sigma-Para-Werte, deren Summe negativ ist, aufweisen.

3. Anordnung nach Anspruch 1 oder 2, dadurch gekennzeichnet, daß die Farbstoffempfangsschicht ein thermisch gehärtetes Produkt von Copoly(vinylchlorid/vinylacetat/vinylalkohol) und Polyisocyanat enthält.

4. Verfahren zur Herstellung eines Bildes durch bildmäßige Erhitzung eines farbstoffgebenden Elements, das einen Träger enthält, auf dem sich eine Farbstoffschicht mit einem Bindemittel und wenigstens einem N-Aryl-N-alkyl-substituierten Magenta-Tricyanovinylanilinfarbstoff befindet, dessen N-Arylgruppe entweder eine elektronenliefernde Gruppe mit einem negativen Hammett-Sigma-Para-Wert oder 2 bis 5 identische oder verschiedene Substituenten, deren Hammett-Sigma-Para-Werte eine negative Summe ergeben, trägt, und durch die Übertragung des bildmäßig erhitzten Farbstoffes auf ein Empfangselement mit einer Farbstoffbildempfangsschicht, die wenigstens ein Copolymeres von Polyvinylchlorid enthält.

5. Verfahren nach Anspruch 4, dadurch gekennzeichnet, daß der N-Aryl-N-alkyl-substituierte Magenta-Tricyanovinylanilinfarbstoff der allgemeinen Formel (I) entspricht : 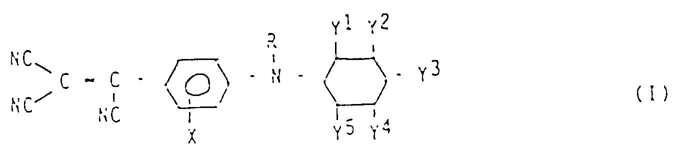 in der bedeuten :
X Wasserstoff oder einen Substituenten,
R eine verzweigte oder unverzweigte Alkylgruppe, eine substituierte verzweigte oder unverzweigte Alkylgruppe, eine Cycloalkylgruppe oder eine substituierte Cycloalkylgruppe, und
Y¹, Y², Y³, Y⁴ und Y⁵ je Wasserstoff oder einen Substituenten, vorausgesetzt, daß wenigstens ein Element von Y¹ bis Y⁵ nicht Wasserstoff ist und - falls nur 1 Element von Y¹ bis Y⁵ einen Substituenten darstellt - dieser Substituent eine elektronenliefernde Gruppe mit einem negativen Hammett-Sigma-Para-Wert darstellt, oder - falls 2 oder mehr Elemente von Y¹ bis Y⁵ einen Substituenten darstellen, diese Substituenten gleich oder verschieden sein können und Hammett-Sigma-Para-Werte, deren Summe negativ ist, aufweisen.

6. Verfahren nach Anspruch 4, dadurch gekennzeichnet, daß die Farbstoffempfangsschicht ein thermisch gehärtetes Produkt von Copoly(vinylchlorid/vinylacetat/vinylalkohol) und Polyisocyanat enthält.

## Revendications

1. Assemblage à utiliser dans l'impression par transfert thermique de colorants, comprenant un élément donneur de colorant et un élément de réception contenant une couche de réception de colorant comprenant un chlorure de polyvinyle, ledit élément donneur de colorant comprenant un support sur lequel est disposée une couche de colorant comprenant un liant et un colorant magenta de tricyanovinylaniline N-aryl-N-alkyl-substituée, dans lequel le groupe N-aryle, soit porte un groupe donneur d'électrons possédant une valeur sigma para de Hammett négative, soit porte de 2 à 5 substituants qui peuvent être identiques ou différents et possèdent des valeurs sigma para de Hammett dont la somme est négative.

2. Assemblage selon la revendication 1, dans lequel ledit colorant de tricyanovinylaniline N-aryl-N-alkyl-substituée correspond à la formule générale (I): 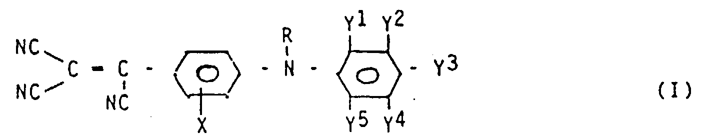 dans laquelle:
X représente un atome d'hydrogène ou un substituant,
R représente un groupe alkyle à chaîne droite ou ramifiée, un groupe alkyle substitué à chaîne droite ou ramifiée, un groupe cycloalkyle ou encore un groupe cycloalkyle substitué, et
chacun des radicaux Y¹, Y², Y³, Y⁴ et Y⁵ représente un atome d'hydrogène ou un substituant, avec cette réserve qu'au moins un des radicaux Y¹ à Y⁵ ne représente pas un atome d'hydrogène et que - lorsque seulement 1 des radicaux Y¹ à Y⁵ représente un substituant - ce substituant est un groupe donneur d'électrons possédant une valeur sigma para de Hammett négative ou bien - lorsque 2 des radicaux Y¹ à Y⁵ ou plus représentent un substituant - ces substituants peuvent être identiques ou différents et possèdent des valeurs sigma para de Hammett dont la somme est négative.

3. Assemblage selon la revendication 1 ou 2, dans lequel ladite couche de réception de colorant comprend un produit durci à la chaleur d'un copolymère de chlorure de vinyle/acétate de vinyle/alcool vinylique et d'un poly-isocyanate.

4. Procédé pour former une image en chauffant en forme d'image, un élément donneur de colorant comprenant un support sur lequel est disposée une couche de colorant comprenant un liant et au moins un colorant magenta de tricyanovinylaniline N-aryl-N-alkyl-substituée, dont le groupe N-aryle, soit porte un groupe donneur d'électrons possédant une valeur sigma para de Hammett négative, soit porte de 2 à 5 substituants qui peuvent être identiques ou différents et possèdent des valeurs sigma para de Hammett dont la somme est négative, et effectuer le transfert du colorant chauffé en forme d'image à un élément de réception possédant une couche de réception d'image de colorant comprenant au moins un copolymère de chlorure de polyvinyle.

5. Procédé selon la revendication 4, dans lequel ledit colorant de tricyanovinylaniline N-aryl-N-alkyl-substituée correspond à la formule générale (I): 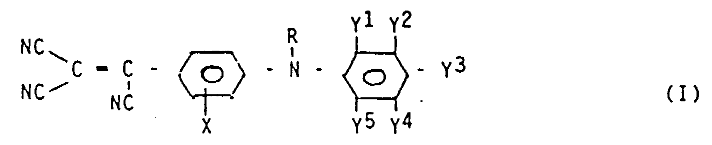 dans laquelle:
X représente un atome d'hydrogène ou un substituant,
R représente un groupe alkyle à chaîne droite ou ramifiée, un groupe alkyle substitué à chaîne droite ou ramifiée, un groupe cycloalkyle ou encore un groupe cycloalkyle substitué, et
chacun des radicaux Y¹, Y², Y³, Y⁴ et Y⁵ représente un atome d'hydrogène ou un substituant, avec cette réserve qu'au moins un des radicaux Y¹ à Y⁵ ne représente pas un atome d'hydrogène et que - lorsque seulement 1 des radicaux Y¹ à Y⁵ représente un substituant - ce substituant est un groupe donneur d'électrons possédant une valeur sigma para de Hammett négative ou bien - lorsque 2 des radicaux Y¹ à Y⁵ ou plus représentent un substituant - ces substituants peuvent être identiques ou différents et possèdent des valeurs sigma para de Hammett dont la somme est négative.

6. Procédé selon la revendication 4, dans lequel ladite couche de réception de colorant comprend un produit durci à la chaleur d'un copolymère de chlorure de vinyle/acétate de vinyle/alcool vinylique et d'un polyisocyanate.
